# EUROPEAN PATENT SPECIFICATION

(11) **EP 2 012 472 B1**
(45) Date of publication and mention of the grant of the patent: **07.03.2012**
(21) Application number: 07012936.6
(22) Date of filing: 02.07.2007
(51) Int. Cl.: H04W 36/28

(54) **Method, device and network for utilizing a circuit switched service in a packet switched domain and communication system comprising such device**
Verfahren, Vorrichtung und Netz zur Verwendung eines Schaltungsdienstes in einer paketgeschalteten Domäne und Kommunikationssystem mit einer solchen Vorrichtung
Procédé, appareil et réseau pour utiliser un service à circuit commuté dans un domaine à paquets commutés et système de communications comprenant un tel dispositif

(43) Date of publication of application: 07.01.2009
(73) Proprietor: Nokia Siemens Networks Oy, 02610 Espoo (FI)
(72) Inventor: Holma, Harri, 00660 Helsinki (FI); Pirskanen, Juho, 33580 Tampere (FI); Toskala, Antti, 02180 Espoo (FI)
(74) Representative: Schober, Ralf Stefan

(56) References cited:
- EP-A- 1 404 064
- QUALCOMM EUROPE: "HSPA VoIP Service Continuity in Rel-7" 3GPP TSG RAN WG2 #58, R2-072229, [Online] 15 May 2007 (2007-05-15), pages 1-21, XP002461669 Retrieved from the Internet: URL:http://www.3gpp.org/ftp/tsg_ran/WG2_RL 2/TSGR2_58/Documents/> [retrieved on 2007-12-10]
- NORTEL: "RAN Impact for Single Radio VCC" 3GPP TSG WG2 #54, S2-062889, [Online] 28 August 2006 (2006-08-28), - 1 September 2006 (2006-09-01) pages 1-4, XP002461670 Retrieved from the Internet: URL:http://www.3gpp.org/ftp/tsg_sa/WG2_Arc h/TSGS2_54_Sophia_Antipolis/Docs/> [retrieved on 2007-12-10]
- HUAWEI: "Proposal for an enhanced SRV solution D using DTM handover" 3GPP TSG SA 2 #57, S2-071703, [Online] 23 April 2007 (2007-04-23), - 27 April 2007 (2007-04-27) pages 1-5, XP002461671 Retrieved from the Internet: URL:http://www.3gpp.org/ftp/tsg_sa/WG2_Arc h/TSGS2_57_Beijing/Docs/> [retrieved on 2007-12-10]
- NSN: "Supporting CS over HSPA" 3GPP TSG RAN WG2 #59, R2-073487, [Online] 15 August 2007 (2007-08-15), pages 1-2, XP002461672 Retrieved from the Internet: URL:http://www.3gpp.org/ftp/tsg_ran/WG2_RL 2/TSGR2_59/Docs/> [retrieved on 2007-12-10]

## Description

The invention relates to a method and to a device for utilizing a circuit switched service in a packet switched domain and a communication system comprising such a device.

High-Speed Packet Access (HSPA) is a collection of mobile telephony protocols that extend and improve the performance of existing UMTS protocols.

Standard document 3GPP TR 25.999 (V2.0.0) "3GPP, HSPA Evolution (FDD); (Release 7)" states that HSPA networks will form an integral part of future 3G systems and as they evolve, should provide a smooth migration path towards Long Term Evolution (LTE).

According to document 3GPP TS 23.206 V7.3.0 "3GPP, Voice Call Continuity (VCC) between Circuit Switched (CS) and IP Multimedia Subsystem (IMS); Stage 2 (Release 7)" Voice Call Continuity is a home IP Multimedia System (IMS) application that provides capabilities to transfer voice calls between the CS domain and the IMS. VCC provides functions for voice call originations, voice call terminations and for Domain Transfers between the CS domain and the IMS and vice versa.

QUALCOMM EUROPE: "HSPA VoIP Service Continuity in Rel-7" 3GPP TSG RAN WG2 #58, R2-072229, [Online] 15 May 2007 (2007-05-15) discloses a method of switching an HSPA VoIP (packet switched) call to a WCDMA or GSM circuit switched call using an additional dedicated channel.

However, existing approaches for Voice Call Continuity are not very efficient and often require power consuming channels to be set up further resulting in disadvantageous synchronization efforts by providing such dedicated channels.

The **problem** to be solved is to overcome the disadvantages as stated before and to provide an approach that allows an efficient transmission and reception of voice calls.

This problem is solved according to the features of the independent claims. Further embodiments result from the depending claims.

In order to overcome this problem, a method for utilizing a circuit switched service in a packet switched domain is provided as set out in claim 1,
- wherein a mobile terminal is connected to a first network,
- said first network comprises a first service and a second service,
- wherein the mobile terminal is connected to the first service of the first network via a first MAC-d flow.

The method comprises the following steps:
- At least one second MAC-d flow is set up between the mobile terminal and the second service of the first network;
- at least a connection is set up via the at least one second MAC-d flow.

Hence, this approach installs at least one additional MAC-d flow to the second service of the first network thereby allowing an efficient and fast transfer of data, e.g., a voice call, from the first service to the second service.

MAC-d is the MAC entity that handles the dedicated transport channel (DCH). The MAC-d entity is described, e.g., in 3GPP TS 25.321 V7.4.0 "3GPP, Medium Access Control (MAC) protocol specification (Release 7)".

In an embodiment, the method comprises the following steps:
- information relating to the first MAC-d flow is transferred and/or mapped to the at least one second MAC-d flow;
- the first MAC-d flow is released.

Thus, information transferred via the first MAC-d flow for the first service is handed over to the at least one MAC-d flow for the second service. As stated before, the first MAC-d flow as well as the second MAC-d flow may be part of the first network, hence this sort of transfer in particular of call related data can be conducted in a fast and efficient way without having to establish another physical connection that would require signaling efforts and also would lead to an increased power consumption.

In particular, voice packets coming from the packet switched core network may be mapped to the first MAC-d flow. Voice packets coming from the circuit switched core network may be mapped to the at least one second MAC-d flow.

In another embodiment, the connection set up via the at least one second MAC-d flow is a voice connection, in particular a circuit switched call.

In a further embodiment, the first network is a network capable of running a circuit switched (CS) service and a packet switched (PS) service.

This allows the efficient transfer of call-related information from the PS-domain to the CS-domain. Such a transfer can be a preliminary action to a handover to be conducted for the mobile terminal from the first network to a second network, in particular if such second network is only capable of running a circuit switched service (e.g., if the second network is a non-3G network, in particular a non-HSPA network like, e.g., GSM).

Hence, the approach advantageously allows a support of circuit switched services over a packet switched network running, e.g., HSPA. This further enables voice over IP to be mapped and transferred to regular circuit switched calls without any discontinuity.

It is also an embodiment that the first service of the first network is a packet switched service and the second service of the switched network is a circuit switched service. However, it is also possible that the first service of the first network is a circuit switched service and the second service of the switched network is a packet switched service.

This allows any mapping from circuit switched calls to packet switched calls and/or vice versa.

In a next embodiment, the mobile terminal detects a deterioration of its connection to the first network prior to the step of setting up the at least one second MAC-d flow.

The mobile terminal may scan for additional networks and compare a signal strength to the current (here: first) network with signal strength values of further networks. Once, the value of the signal strength to the current network is below a certain threshold and/or a value of a signal strength to a new (here: second) network is above a certain threshold, the mobile terminal could initiate a handover from the first network to the second network (such a handover may in particular be network controlled and mobile assisted).

However, if the second network, e.g., only supports circuit switched calls whereas the mobile terminal actually is connected to the first network processing packet switched calls via, e.g., HSPA, a transfer from the packet switched domain to the circuit switched domain may be processed as described herein prior to the actual handover proceedings from the first network to the second network.

It is to be noted that it could be indicated by either the mobile terminal (UE) or by the RNC (Radio Network Controller) functionality of the (core) network (RAN) whether a domain change from the PS domain to the CS domain or vice versa is desirable and/or possible.

It is also an embodiment that the method comprises the step:
- a handover is conducted to a second network comprising a third service.

Thus, a handover from the first to the second network can be initiated after the transfer from the packet switched domain to the circuit switched domain has been conducted in the first network.

Pursuant to another embodiment, the third service is a circuit switched service.

In case the second network does not support packet switched services, the first network prior to the handover to the second network transferred the call from the packet switched domain to the circuit switched domain via MAC-d flows as described. Then, the handover from the first network to the second network can process calls of the circuit switched domain only.

According to an embodiment, the mobile terminal is a user equipment. The mobile terminal may further be any kind of device comprising a 3G radio unit like, e.g., a palm computer or a laptop computer with a 3G interface. According to another embodiment, the first network is a 3G network that is in particular capable of high speed packet access (HSPA).

In yet another embodiment, the method as described herein is run on a device comprising a RNC functionality. This may in particular be a network component providing at least a portion of such RNC functionality.

According to a next embodiment, said RNC functionality may be distributed among several device, in particular among several network components.

Pursuant to yet an embodiment, the method as described may utilize voice over IP calls and/or circuit switched phone calls.

It is also an embodiment that Radio Access Bearer (RAB) flows may be differentiated by utilizing at least one of the following means:
- Packet sizes;
- Logical channel ID;
- Packet Data Convergence Protocol (PDCP) layer by utilizing Packet Identifier (PID) fields of a PDCP header.

The problem stated supra is also solved by a device for utilizing a circuit switched service in a packet switched domain comprising a processor unit that is arranged and/or equipped such that the method as described herein is executable on said processor unit.

According to an embodiment, the device is a communication device, in particular a network component comprising (at least a portion of) a RNC functionality.

Also, the problem stated above is solved by a communication system comprising the device as described herein.

Embodiments of the invention are shown and illustrated in the following figures:
- Fig.1: shows an environment comprising a network and a mobile terminal, the network providing a packet switched service and a circuit switched service, wherein the mobile terminal is connected via MAC-d flows;
- Fig.2: shows based on the environment according to Fig.1 a scenario comprising an additional network providing only a circuit switched service, wherein the mobile terminal performs a handover from the first network to the second network;
- Fig.3: shows a table visualizing a PDCP Data PDU format according to 3GPP TS 25.323.

This approach relates in particular to a handling Voice Call Continuity (VCC) and running circuit switched (CS) services over high speed packet access (HSPA). It suggests an efficient solution as how to switch in particular from voice over IP (VoIP) to a regular circuit switched (CS) call in case a coverage of the VoIP capable network is lost, e.g., if the mobile terminal, in particular a user equipment (UE), moves to cells without HSPA support or to cells supporting GSM only.

The solution presented advantageously avoids the need for setting up dedicated channels in parallel, which would reduce a power available for high speed downlink packet access (HSDPA). Furthermore, the approach provided herewith allows a fast transfer from packet switched services to circuits switched services.

The approach as set forth suggests to perform a transfer from the packet switched (PS) service to the circuit switched (CS) service using at least one additional MAC-d flow (in particular using multiple MAC-d flows) for the circuit switched traffic as well as for the packet switched traffic. The at least one additional MAC-d flow is utilized for a single user, in particular for a mobile terminal that is advantageously a user equipment (UE).

Based on the MAC-d flows a mapping is conducted transferring the circuit switched service, e.g., an adaptive multi-rate (AMR) speech call, to a high speed downlink packet access (HSDPA) and/or to a high speed uplink access (HSUPA).

In addition, it is also possible to perform a transfer from the circuit switched service to the packet switched service.

Advantageously, the AMR speech call as a circuit switched service may be mapped in an unacknowledged mode of a Radio Link Control (RLC) protocol (see, e.g., 3GPP TS 25.322, V7.2.0, Technical Specification Group Radio Access Network; Radio Link Control (RLC) protocol specification). Furthermore, ciphering may be performed in the RLC layer.

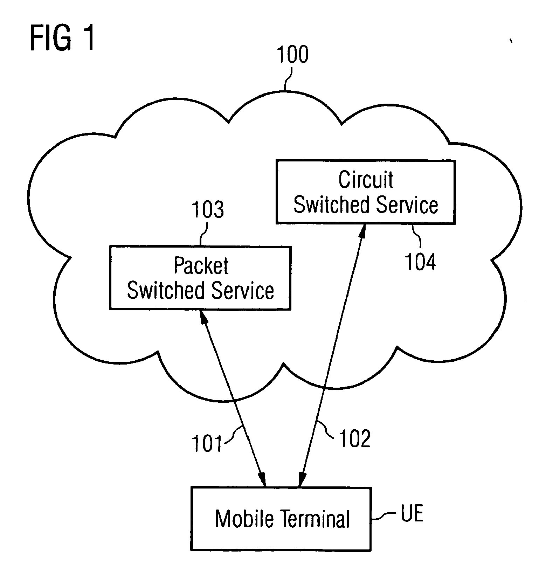

**Fig.1** shows a scenario comprising a first network 100 that is capable of processing a Packet Switched Service 103 and a Circuit Switched Service 104. A Mobile Terminal UE is processing a voice call via a MAC-d flow 101 that is connected with the Packet Switched Service 103. In particular, this voice call processed may be a voice over IP (VoIP) telephone call.

The first network 100 and/or the Mobile Terminal UE may recognize a deterioration of a signal strength relating to the connection between the Mobile Terminal UE and the first network 100. The Mobile Terminal UE may scan for further networks to be connected to. If such a further network found only supports circuit switched services, the current call is transferred from the Packet Switched Service 103 to the Circuit Switched Service 104 by setting up at least one additional MAC-d flow 102 in parallel to the existing MAC-d flow 101. The circuit switched call is set up via this at least one additional MAC-d flow 102 (i.e. transferred from the Packet Switched Service 103) and subsequently the MAC-d flow 101 may be terminated.

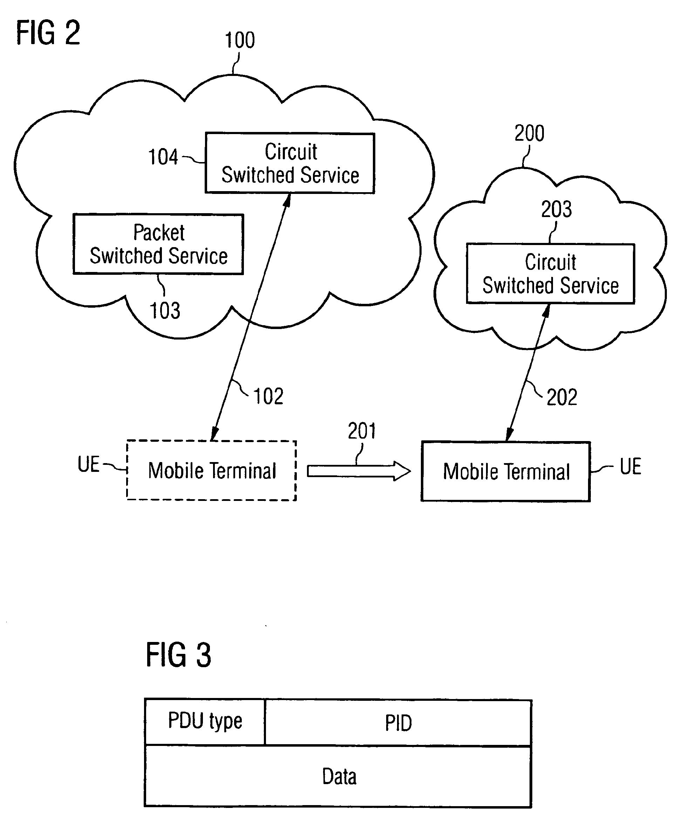

As a next step, as visualized in **Fig.2**, the mobile terminal may move to the coverage of a second network 200 that may be a GSM network not providing any HSPA services (indicated by only comprising a Circuit Switched Service 203). A handover 201 is conducted from the Circuit Switched Service 104 of the first network 100 to the Circuit Switched Service 203 of the second network 200. A MAC-d flow 202 may be set up to carry the call between the Mobile Terminal UE and the second network 200.

A separation of the downlink and in particular of the uplink Radio Access Bearer (RAB) sub-flows utilized by AMR circuit switched voice traffic can be used for unequal error protection with positive effects regarding the performance. Another advantage is a separation of different RABs so that circuit switched voice service can remain unchanged. According to document 3GPP, TS 34.108, Common test environments for User Equipment (UE), Conformance testing, AMR voice may use two or three different RAB sub-flows. Such separation may in particular be based on one following options:
- Packet sizes, as received by the user equipment UE and/or by the Radio Network Controller (RNC) as each sub-flow may provide a different set of packets;
- Logical channel ID, so that each RAB sub-flow would be mapped to a separate logical channel utilizing a UM-RLC (RLC, unacknowledged mode) entity; each logical channel could be mapped to the same MAC-d flow;
- Packet Data Convergence Protocol (PDCP) layer by utilizing Packet Identifier (PID) fields of the PDCP header as shown in table of **Fig. 3**. PID values 15...31 may be used as RAB sub-flows (see also 3GPP TS 25.323 V7.4.0, Packet Data Convergence Protocol (PDCP) specification).

A similar solution may be applied for narrowband AMR or for wideband AMR.

In case of wideband AMR the SRB#5 (Signaling Radio Bearer) utilized for rate control can also be mapped to HSPA according to the scheme as set forth above.

Further, circuit switched data services may utilize this scheme if needed.

The approach provided bears in particular the following advantages:
a) The circuit switched services can be processed as new services on HSPA; hence, the services can be handled in a similar fashion, although they may not be multiplexed within the same MAC-d flow.
b) No changes are required for the circuit switched core network. Hence, the circuit switched core network may not have to be aware whether a particular connection is mapped via DCH or on HSPA.
c) The VoIP call continuity is improved by supporting AMR over HSPA.
d) Problems related to DL code and power blocking are solved.
e) AMR voice capacity is increased by all features introduced in continuous packet connectivity that may in particular be utilized via VoIP mechanisms.
f) The power consumption of the user equipment for AMR circuit switched voice calls is improved by providing discontinuous transmission and reception.
g) Faster call setup time is realized since the core network (NAS) signaling is running via HSPA.
h) A flexibility of the system is increased by providing the possibility to add parallel packet switched services together with, e.g., a circuit switched voice call. This may in particular be useful with regard to real-time video sharing and/or video streaming applications.

## Claims

1. A method for utilizing a circuit switched service in a packet switched domain,
- wherein a mobile terminal (UE) is connected to a first network (100),
- said first network comprises a first service (104) and a second service (103),
- wherein the mobile terminal (UE) is connected to the first service (104) of the first network (100) via a first MAC-d flow to transfer call data via the first MAC-d flow;
the method comprising the following steps:
- at least one second MAC-d flow is set up between the mobile terminal (UE) and the second service (103) of the first network (100) to transfer the call data via the second MAC-d flow;
- at least a connection is set up via the at least one second MAC-d flow,
- the call data transferred via the first MAC-d flow is transferred and/or mapped to the at least second MAC-d flow;
- the first MAC-d flow is released,
- wherein the first service (104) of the first network (100) is a packet switched service and the second service (103) of the first network (100) is a circuit switched service,
- **characterized in that** the first and second MAC-d flows are via high speed packet access.

2. The method according to claim 1, wherein the connection set up via the at least one second MAC-d flow is a voice connection.

3. The method according to claim 1 or claim 2, wherein the first network (100) is a network capable of running a circuit switched service and a packet switched service.

4. The method according to any of the preceding claims, wherein the mobile terminal (UE) detects a deterioration of its connection to the first network (100) prior to initiating the steps of said method.

5. The method according to any of the preceding claims, wherein it is indicated by either the mobile terminal (UE) or by a functionality of the first network (100) whether a domain change from the PS domain to the CS domain or vice versa is desirable and/or possible.

6. The method according to any of the preceding claims comprising the step:
- a handover is conducted to a second network (200) comprising a third service (203).

7. The method according to claim 6, wherein said third service (203) is a circuit switched service.

8. The method according to any of the preceding claims, wherein the mobile terminal (UE) is a user equipment.

9. The method according to any of the preceding claims, wherein the first network (100) is a 3G network capable of high speed packet access.

10. The method according to any of the preceding claims that is run on at least one device comprising a RNC functionality.

11. The method according to claim 10, wherein the RNC functionality is distributed among several devices.

12. The method according to any of the preceding claims utilizing voice over IP and/or circuit-switched phone calls.

13. The method according to any of the preceding claims, wherein Radio Access Bearer flows may be differentiated by utilizing at least one of the following means:
- Packet sizes;
- Logical channel ID;
- Packet Data Convergence Protocol layer by utilizing Packet Identifier fields of a Packet Data Convergence Protocol header.

14. A communications device for utilizing a circuit switched service in a packet switched domain comprising a processor unit that is arranged such that the method according of any of the preceding claims is executable on said processor unit.

15. The communications device according to claim 14, wherein said device is a network component comprising a RNC functionality.

16. A communications network comprising the communications device according claim 14 or claim 15 and at least one mobile terminal.

## Patentansprüche

1. Verfahren zum Benutzen eines leitungsvermittelten Dienstes in einer paketvermittelten Domäne,
- wobei ein mobiles Endgerät (UE) mit einem ersten Netz (100) verbunden ist,
- wobei das erste Netz einen ersten Dienst (104) und einen zweiten Dienst (103) umfasst,
- wobei das mobile Endgerät (UE) über einen ersten MAC-d-Fluss zum Transfer von Anrufdaten über den ersten MAC-d-Fluss mit dem ersten Dienst (104) des ersten Netzes (100) verbunden ist;
wobei das Verfahren die folgenden Schritte umfasst:
- mindestens ein zweiter MAC-d-Fluss wird zwischen dem mobilen Endgerät (UE) und dem zweiten Dienst (103) des ersten Netzes (100) eingerichtet, um die Anrufdaten über den zweiten MAC-d-Fluss zu transferieren;
- mindestens eine Verbindung wird über den mindestens einen zweiten MAC-d-Fluss eingerichtet,
- die über den ersten MAC-d-Fluss transferierten Anrufdaten werden zu dem mindestens zweiten MAC-d-Fluss transferiert und/oder darauf abgebildet;
- der erste MAC-d-Fluss wird freigegeben,
- wobei der erste Dienst (104) des ersten Netzes (100) ein paketvermittelter Dienst ist und der zweite Dienst (103) des ersten Netzes (100) ein leitungsvermittelter Dienst ist,
- **dadurch gekennzeichnet, dass** der erste und zweite MAC-d-Fluss über High Speed Packet Access erfolgen.

2. Verfahren nach Anspruch 1, wobei die über den mindestens einen zweiten MAC-d-Fluss eingerichtete Verbindung eine Sprachverbindung ist.

3. Verfahren nach Anspruch 1 oder Anspruch 2, wobei das erste Netz (100) ein Netz ist, das einen leitungsvermittelten Dienst und einen paketvermittelten Dienst ausführen kann.

4. Verfahren nach einem der vorhergehenden Ansprüche, wobei das mobile Endgerät (UE) vor dem Einleiten der Schritte des Verfahrens eine Verschlechterung seiner Verbindung mit dem ersten Netz (100) detektiert.

5. Verfahren nach einem der vorhergehenden Ansprüche, wobei entweder durch das mobile Endgerät (UE) oder durch eine Funktionalität des ersten Netzes (100) angezeigt wird, ob ein Domänenwechsel von der PS-Domäne zu der CS-Domäne oder umgekehrt wünschenswert und/oder möglich ist.

6. Verfahren nach einem der vorhergehenden Ansprüche, mit dem folgenden Schritt:
- ein Hannover wird zu einem zweiten Netz (200) durchgeführt, das einen dritten Dienst (203) umfasst.

7. Verfahren nach Anspruch 6, wobei der dritte Dienst (203) ein leitungsvermittelter Dienst ist.

8. Verfahren nach einem der vorhergehenden Ansprüche, wobei das mobile Endgerät (UE) ein Benutzergerät ist.

9. Verfahren nach einem der vorhergehende Ansprüche, wobei das erste Netz (100) ein 3G-Netz mit der Fähigkeit zu High Speed Packet Access ist.

10. Verfahren nach einem der vorhergehenden Ansprüche, das auf mindestens einer Einrichtung ausgeführt wird, die eine RNC-Funktionalität umfasst.

11. Verfahren nach Anspruch 10, wobei die RNC-Funktionalität über mehrere Einrichtungen verteilt ist.

12. Verfahren nach einem der vorhergehenden Ansprüche, das Voice-over-IP- und/oder leitungsvermittelte Telefonanrufe benutzt.

13. Verfahren nach einem der vorhergehenden Ansprüche, wobei Flüsse des Radio Access Bearer durch Benutzung mindestens eines der folgenden Mittel differenziert werden können:
- Paketgrößen;
- ID des logischen Kanals;
- die Schicht des Packet Data Convergence Protocol durch Benutzung von Feldern des Packet Identifier eines Headers des Packet Data Convergence Protocol.

14. Kommunikationseinrichtung zur Benutzung eines leitungsvermittelten Dienstes in einer paketvermittelten Domäne mit einer Prozessoreinheit, die so ausgelegt ist, dass das Verfahren nach einem der vorhergehenden Ansprüche auf der Prozessoreinheit ausführbar ist.

15. Kommunikationseinrichtung nach Anspruch 14, wobei die Einrichtung eine Netzkomponente ist, die eine RNC-Funktionalität umfasst.

16. Kommunikationsnetz, das die Kommunikationseinrichtung nach Anspruch 14 oder Anspruch 15 und mindestens ein mobiles Endgerät umfasst.

## Revendications

1. Un procédé d'utilisation d'un service à commutation de circuits dans un domaine à commutation de paquets,
- dans lequel un terminal mobile (UE) est raccordé à un premier réseau (100),
- ledit premier réseau comprend un premier service (104) et un deuxième service (103),
- dans lequel le terminal mobile (UE) est raccordé au premier service (104) du premier réseau (100) par l'intermédiaire d'un premier flux MAC-d de façon à transférer des données d'appel par l'intermédiaire du premier flux MAC-d, le procédé comprenant les opérations suivantes :
- au moins un deuxième flux MAC-d est établi entre le terminal mobile (UE) et le deuxième service (103) du premier réseau (100) de façon à transférer des données d'appel par l'intermédiaire du deuxième flux MAC-d,
- au moins une connexion est établie par l'intermédiaire du au moins un deuxième flux MAC-d,
- les données d'appel transférées par l'intermédiaire du premier flux MAC-d sont transférées et/ou mises en correspondance avec le au moins deuxième flux MAC-d,
- le premier flux MAC-d est libéré,
- dans lequel le premier service (104) du premier réseau (100) est un service à commutation de paquets et le deuxième service (103) du premier réseau (100) est un service à commutation de circuits,
- **caractérisé en ce que** le premier et le deuxième flux MAC-d passent par l'intermédiaire d'un accès en mode paquets à haut débit.

2. Le procédé selon la revendication 1, dans lequel la connexion établie par l'intermédiaire du au moins un deuxième flux MAC-d est une connexion vocale.

3. Le procédé selon la revendication 1 ou 2, dans lequel le premier réseau (100) est un réseau capable d'exécuter un service à commutation de circuits et un service à commutation de paquets .

4. Le procédé selon l'une quelconque des revendications précédentes, dans lequel le terminal mobile (UE) détecte une détérioration de sa connexion au premier réseau (100) avant de mettre en oeuvre les opérations dudit procédé.

5. Le procédé selon l'une quelconque des revendications précédentes, dans lequel il est indiqué par soit le terminal mobile (UE) ou par une fonctionnalité du premier réseau (100) si un changement de domaine du domaine PS au domaine CS ou vice versa est souhaitable et/ou possible.

6. Le procédé selon l'une quelconque des revendications précédentes comprenant l'opération suivante :
- un transfert est effectué vers un deuxième réseau (200) comprenant un troisième service (203).

7. Le procédé selon la revendication 6, dans lequel ledit troisième service (203) est un service à commutation de circuits.

8. Le procédé selon l'une quelconque des revendications précédentes, dans lequel le terminal mobile (UE) est un équipement d'utilisateur.

9. Le procédé selon l'une quelconque des revendications précédentes, dans lequel le premier réseau (100) est un réseau 3G capable d'un accès en mode paquets à haut débit.

10. Le procédé selon l'une quelconque des revendications précédentes qui est exécuté sur au moins un dispositif comprenant une fonctionnalité RNC.

11. Le procédé selon la revendication 10, dans lequel la fonctionnalité RNC est répartie entre plusieurs dispositifs.

12. Le procédé selon l'une quelconque des revendications précédentes utilisant des appels téléphoniques voix sur IP et/ou à commutation de circuits.

13. Le procédé selon l'une quelconque des revendications précédentes, dans lequel des flux de support d'accès radio peuvent être différenciés en utilisant au moins l'un des moyens suivants :
- tailles de paquets,
- identifiant de canal logique,
- couche de protocole de convergence de paquets de données en utilisant des champs Identifiant de paquet d'un entête de protocole de convergence de paquets de données.

14. Un dispositif de communication destiné à l'utilisation d'un service à commutation de circuits dans un domaine à commutation de paquets comprenant un processeur qui est agencé de sorte que le procédé selon l'une quelconque des revendications précédentes soit exécutable sur ledit processeur.

15. Le dispositif de communication selon la revendication 14, dans lequel ledit dispositif est un composant de réseau comprenant une fonctionnalité RNC.

16. Un réseau de communication comprenant le dispositif de communication selon la revendication 14 ou 15 et au moins un terminal mobile.
